# FASCICULE DE BREVET EUROPEEN

(11) **EP 3 114 726 B1**
(45) Date de publication et mention de la délivrance du brevet: **29.11.2017**
(21) Numéro de dépôt: 15707608.4
(22) Date de dépôt: 27.02.2015
(51) Int. Cl.: H01M 2/10, H01M 2/20, H01M 2/30, H01M 12/06

(54) **MODULE D'ASSEMBLAGE COMPORTANT DES CELLULES ÉLECTROCHIMIQUES REÇUES PAR DES COSSES ET DES PINCES DE CONNEXION**
ANORDNUNGSMODUL MIT ELEKTROCHEMISCHEN, VON LASCHEN UND VERBINDUNGSCLIPS AUFGENOMMENEN ZELLEN
ASSEMBLY MODULE COMPRISING ELECTROCHEMICAL CELLS RECEIVED BY LUGS AND CONNECTING CLIPS

(30) Priorité: 03.03.2014 FR 1451692
(43) Date de publication de la demande: 11.01.2017
(73) Titulaire: Commissariat à l'Énergie Atomique et aux Énergies Alternatives, 75015 Paris (FR)
(72) Inventeur: TURIN, Guillaume, F-59000 Lille (FR); AZAIS, Philippe, 38120 Saint Egreve (FR); BERTHE DE POMMERY, Yves, 54380 Dieulouard (FR); PICARD, Lionel, F-38170 Seyssinet-Pariset (FR)
(74) Mandataire: Brevalex
(86) Numéro de dépôt international: PCT/EP2015/054147
(87) Numéro de publication internationale: WO 2015/132151

(56) Documents cités:
- US-A- 5 569 551
- US-A1- 2012 021 303

## Description

### DOMAINE TECHNIQUE

La présente invention se rapporte au domaine des cellules électrochimiques élémentaires destinées à être assemblées au sein de modules électrochimiques eux-mêmes assemblés entre eux pour former un système de stockage d'énergie, par exemple un pack batterie, ces cellules électrochimiques comportant au moins une électrode à gaz, et plus particulièrement au domaine des cellules électrochimiques du type métal-gaz. Elle est notamment concernée par l'agencement en modules électrochimiques de telles cellules, la connexion électrique des bornes de telles cellules et la circulation du gaz au sein des modules vers chaque électrode à gaz.

L'invention trouve des applications dans de nombreux domaines de l'industrie, notamment pour des applications stationnaires ou embarquées, en particulier pour le domaine de l'alimentation électrique des véhicules de transport, terrestres, aériens, spatiaux et/ou nautiques, par exemple pour l'alimentation électrique des véhicules hybrides et/ou électriques pour lesquels un agencement d'un grand nombre de cellules électrochimiques et une circulation dynamique du gaz sont requis.

Elle propose ainsi un module électrochimique d'assemblage comportant une pluralité de cellules électrochimiques élémentaires comportant au moins une électrode à gaz, un système de stockage d'énergie comportant une pluralité de tels modules électrochimiques d'assemblage, ainsi qu'un procédé de réalisation d'un tel module électrochimique d'assemblage.

### ÉTAT DE LA TECHNIQUE ANTÉRIEURE

Les accumulateurs sont des systèmes permettant de stocker de l'énergie électrique sous forme chimique. Ils sont basés sur un système électrochimique réversible, c'est-à-dire rechargeable. Cependant, toutes les propositions énoncées ci-après restent valables pour des systèmes primaires (non rechargeables), tels que par exemple aluminium-air ou zinc-air, sauf mention contraire.

Le système de stockage d'énergie est un assemblage de modules électrochimiques, eux-mêmes assemblages de cellules électrochimiques élémentaires qui constituent des accumulateurs. Au sein du système de stockage d'énergie, les cellules électrochimiques sont reliées et gérées par une électronique de contrôle, encore appelée électronique BMS pour « Battery Management System » en anglais, qui permet d'optimiser la charge et la décharge et de prolonger la durée de vie.

Les accumulateurs ou cellules contiennent des réactifs chimiques qui, une fois activés, permettent de fournir de l'électricité à la demande. Ces réactions électrochimiques sont activées au sein de la cellule électrochimique élémentaire, entre une électrode positive et une électrode négative baignant dans un électrolyte, lorsqu'une charge électrique est branchée aux bornes de la cellule. A titre d'exemple, la technologie Li-ion consiste à utiliser la circulation électrochimique de l'ion lithium dans deux matériaux et à des valeurs de potentiel différentes : l'électrode positive et l'électrode négative constituent les deux potentiels d'oxydoréduction, et la différence de potentiel crée la tension au sein de la batterie. En cours d'utilisation (l'accumulateur se décharge), l'électrode négative relâche le lithium sous forme ionique Li⁺. Les ions Li⁺ migrent alors vers l'électrode positive, via l'électrolyte conducteur ionique. Le passage de chaque ion Li⁺ au sein de l'accumulateur est compensé par le passage d'un électron dans le circuit externe (courant circulant à partir des bornes de l'accumulateur), en sens inverse, créant ainsi le courant électrique permettant de faire fonctionner le dispositif associé à la batterie. Il y a alors du courant électrique jusqu'à ce qu'il n'y ait plus de lithium au sein de l'électrode négative : l'accumulateur est alors déchargé et son rechargement se fait selon le processus inverse.

En ce qui concerne la conception des cellules électrochimiques élémentaires, trois principaux types de géométrie d'architecture sont couramment utilisés. Ainsi, de façon classique et connue en soi, les cellules peuvent présenter une géométrie cylindrique, une géométrie prismatique ou une géométrie en sachet/empilement (appelée encore « pouch-cell » en anglais).

Par ailleurs, parmi les diverses possibilités existantes pour le choix des électrodes des cellules électrochimiques élémentaires, on connaît les cellules électrochimiques qui comportent au moins une électrode à gaz, encore dénommées « cellules à électrode à gaz », et notamment les cellules dites du type métal-gaz. La présente invention est tout particulièrement concernée par ce type de cellule électrochimique élémentaire, et plus spécifiquement par les cellules électrochimiques élémentaires comportant deux électrodes à gaz, dénommées ci-après « cellules à double électrode à gaz ». Par exemple, les cellules électrochimiques élémentaires de géométrie prismatique ou en sachet peuvent comporter deux électrodes à gaz, une électrode à gaz sur chaque face plate de la cellule, comme décrit notamment dans la demande de brevet EP 0 823 135 A1.

Dans le cas des cellules à électrode à gaz, l'optimisation de la circulation du gaz pour permettre une arrivée optimale du gaz aux électrodes à gaz de chaque cellule d'un module d'assemblage d'un système de stockage d'énergie est une problématique bien connue et fondamentale pour permettre d'améliorer le rendement des batteries du type métal-gaz, en termes de cinétique de réaction, quelque soit l'application envisagée de ces batteries.

De plus, selon les applications visées, notamment dans le domaine du transport (terrestre, aérien, naval, spatial, entre autres) ou dans le domaine des outils de puissance, des problèmes de vibration peuvent apparaître au sein des modules électrochimiques, qui engendrent des débranchements intempestifs au niveau des connexions des bornes des cellules et des phénomènes de résonnance vibratoire dans les modules électrochimiques. Ces problèmes de vibration imposent de concevoir des dispositifs robustes pour maintenir les connexions des cellules et les cellules entre elles.

Aussi, dans le cas des cellules à électrode à gaz, il existe à la fois un besoin en termes d'optimisation de la circulation du gaz vers les électrodes à gaz des cellules et un besoin en termes de fiabilité des connexions électriques des cellules entre elles au moyen de systèmes de connexion électrique peu ou non sensibles aux vibrations, tout en optimisant le volume et la masse des modules intégrant ces cellules.

On connaît déjà de l'art antérieur des solutions proposées pour assurer le maintien des cellules et des connectiques dans un module électrochimique et pour éviter les phénomènes de vibration. Ainsi, par exemple, le brevet US 7,943,252 B2 et la demande de brevet US 2011/0189514 A1 proposent des dispositifs pour assembler et fixer les cellules entre elles de manière robuste, notamment pour des cellules du type Li-ion couramment embarquées dans les véhicules hybrides et électriques, ainsi que dans les outils de puissance.

Dans le cas plus spécifique de cellules à électrode à gaz de géométrie prismatique, diverses solutions ont été apportées pour proposer des dispositifs favorisant l'apport de gaz à la surface de chaque cellule. Certains intercalent des plaques bipolaires entre les cellules. Toutefois, ces solutions ne sont pas suffisamment satisfaisantes en termes de gain de poids et d'espace.

D'autres solutions concernent l'agencement des cellules pour optimiser la circulation d'air au sein du module électrochimique. Ainsi, par exemple, le brevet US 6,517,967 B1 et la demande internationale WO 00/36692 A1 proposent un agencement compact de cellules de géométrie prismatique en les superposant à l'aide d'une structure support adaptée. Cependant, l'espacement entre cellules induit une perte de place au niveau de l'épaisseur du module. La demande de brevet US 2009/0191452 A1 propose quant à elle une circulation optimale du gaz dans un module pour des cellules de géométrie cylindrique. Or, avec des cellules de géométrie cylindrique, le gain de place est moindre que pour une conception prismatique ou en sachet.

Par ailleurs, le brevet US 5,366,822 A et la demande de brevet EP 2 530 762 A1 proposent un agencement de cellules de géométrie prismatique plate avec des espacements ou des canaux pour laisser circuler le gaz. Toutefois, la circulation du gaz est peu performante et une telle conception appliquée à des cellules de géométrie en sachet impose d'utiliser un boîtier rigidifiant la cellule (du type de celui proposé par les demandes de brevet US 2011/0210954 A1 et US 2013/0059171 A1) et, avec un tel dispositif, le module augmente en masse, et diminue donc en énergie massique, ce qui conduit ainsi à perdre l'intérêt de la géométrie en sachet. Par ailleurs, cette conception est appliquée aux cellules du type zinc-air, et n'est pas envisageable pour une cellule du type lithium-air, en raison des contraintes liées à l'utilisation du lithium métal en électrolyte aqueux.

La demande de brevet US 2011/0177377 A1 propose en outre un empilement de cellules de géométrie en sachet dans un module électrochimique. Cette solution n'est toutefois pas satisfaisante dans le cas de cellules à double électrode à gaz car il faut prévoir un espace pour la circulation du gaz. L'intercalation de plaques bipolaires entre les cellules de géométrie en sachet, réalisée pour y remédier, apporte du poids et de l'espace en plus, ce qui n'est pas non plus souhaitable.

La demande internationale WO 00/36669 A1 propose quant à elle un agencement des cellules en parallèle et en quinconce pour un gain de place et une circulation du gaz optimaux selon l'application visée, en particulier la téléphonie mobile. Cependant, la connectique et la fixation des cellules, tant au niveau du module qu'entre elles, ne sont pas développées.

### EXPOSÉ DE L'INVENTION

L'invention a ainsi pour but de remédier au moins partiellement aux besoins mentionnés ci-dessus et aux inconvénients relatifs aux réalisations de l'art antérieur.

L'invention vise notamment à proposer un nouveau type de module électrochimique élémentaire comportant une pluralité de cellules à électrode à gaz, notamment du type métal-gaz, présentant une conception et une architecture particulières pour optimiser la circulation de gaz, optimiser le gain de place et l'intégration des cellules dans le module, et optimiser la connexion électrique des cellules entre elles. En particulier, l'invention vise à trouver une solution de compromis entre un module, comportant un assemblage de cellules, qui favorise la circulation du gaz de façon bien répartie en surface de chaque électrode à gaz, et un module, comportant un assemblage de cellules, qui présente un système de connexion des cellules fiable et peu sensible aux vibrations, pour un volume et une masse optimisés.

L'invention a ainsi pour objet, selon l'un de ses aspects, un module électrochimique d'assemblage d'un système de stockage d'énergie, comportant un assemblage de plusieurs cellules électrochimiques élémentaires à électrode à gaz, caractérisé en ce qu'il comporte :
- une pluralité de cosses associées respectivement à la pluralité de cellules électrochimiques élémentaires, les cosses étant reliées entre elles par un support de connexion et recevant les bornes des cellules électrochimiques élémentaires de sorte que lesdites bornes soient toutes électriquement reliées entre elles par le support de connexion,
- une pluralité d'éléments formant des pinces de connexion recevant chacun au moins deux bornes d'au moins deux cellules électrochimiques élémentaires de sorte que lesdites au moins deux bornes soient électriquement reliées entre elles par l'élément formant une pince de connexion qui leur est associé.

Grâce à l'invention, il est possible de disposer d'un nouveau type de module électrochimique élémentaire, pourvu de cellules à électrode à gaz, qui intègre une disposition et une connexion particulières des cellules. Il peut ainsi être possible de permettre un agencement optimal des cellules à électrode à gaz, notamment à double électrode à gaz, dans le module électrochimique pour une bonne circulation du gaz avec un encombrement réduit. Le principe d'élément formant une pince de connexion peut permettre une insertion et un retrait faciles des cellules, préférentiellement du type à géométrie en sachet, sans danger, et le maintien en place des cellules tout en absorbant les vibrations, en assurant également une connectique efficace simplement modulable (en série ou en parallèle). L'invention peut permettre d'éviter la propagation et l'amplification des vibrations à l'intérieur du module électrochimique. En outre, l'invention peut également présenter un intérêt en termes de gestion thermique pour des cellules de géométrie prismatique ou en sachet. De façon générale, l'invention peut donc permettre un gain en termes de volume, de masse, de connexion modulaire, de fiabilité, de simplicité, de fixation des cellules et de bonne circulation du gaz. En outre, l'invention peut permettre une fixation mécanique simple et efficace des cellules entre elles et au module dans lequel elles sont assemblées.

Le module électrochimique élémentaire selon l'invention peut en outre comporter l'une ou plusieurs des caractéristiques suivantes prises isolément ou suivant toutes combinaisons techniques possibles.

Les cellules électrochimiques élémentaires peuvent avantageusement être de géométrie prismatique ou en sachet, et préférablement de géométrie en sachet.

Les cellules électrochimiques peuvent tout particulièrement être du type métal-gaz, c'est-à-dire comportant au moins une électrode à gaz et une électrode en métal. En particulier, les cellules électrochimiques peuvent être du type lithium-air.

Les cellules électrochimiques élémentaires sont préférentiellement des cellules à double électrode à gaz.

Les cellules électrochimiques élémentaires sont par ailleurs préférentiellement disposées en quinconce au sein du module électrochimique d'assemblage.

Le support de connexion peut comporter une borne de sortie du module électrochimique d'assemblage.

Lesdits éléments formant pinces de connexion peuvent présenter une forme de double pince en Z.

Les cellules électrochimiques élémentaires peuvent être montées en parallèle au sein du module électrochimique d'assemblage.

Dans ce cas, les cosses peuvent recevoir les bornes de même polarité des cellules électrochimiques élémentaires. De plus, les éléments formant des pinces de connexion peuvent recevoir chacun au moins deux bornes de même polarité, opposée à la polarité des bornes des cellules électrochimiques élémentaires reçues dans les cosses.

Lesdits éléments formant des pinces de connexion peuvent être électriquement reliés entre eux par l'intermédiaire de dispositifs de connexion des éléments formant des pinces de connexion.

La hauteur des éléments formant des pinces de connexion peut être supérieure à la hauteur des cellules électrochimiques élémentaires.

Au moins un élément formant une pince de connexion peut être électriquement relié à une borne de sortie.

Les cellules électrochimiques élémentaires peuvent être montées en série au sein du module électrochimique d'assemblage.

Dans ce cas, les éléments formant des pinces de connexion peuvent comporter un premier groupe de premiers éléments formant des pinces de connexion et un deuxième groupe de deuxièmes éléments formant des pinces de connexion, les premiers éléments formant des pinces de connexion reliant électriquement les bornes de deux cellules électrochimiques élémentaires pour former des paires de cellules électrochimiques élémentaires, et les deuxièmes éléments formant des pinces de connexion reliant électriquement les bornes de deux cellules électrochimiques élémentaires appartenant respectivement à deux paires de cellules électrochimiques élémentaires distinctes.

Les premiers éléments formant des pinces de connexion et les deuxièmes éléments formant des pinces de connexion peuvent comporter respectivement des premières et deuxièmes parties isolantes pour ne permettre la connexion électrique qu'entre les cellules électrochimiques élémentaires qu'ils relient entre elles respectivement.

Les deuxièmes éléments formant des pinces de connexion peuvent s'intercaler chacune entre une borne d'une cellule électrochimique élémentaire d'une première paire de cellules électrochimiques élémentaires, appariées par un premier élément formant une pince de connexion, et la cosse correspondante de la cellule électrochimique élémentaire, et entre une borne d'une autre cellule électrochimique élémentaire d'une deuxième paire de cellules électrochimiques élémentaires, distincte de la première paire, appariées par un premier élément formant une pince de connexion, et la cosse correspondante de l'autre cellule électrochimique élémentaire.

Les cellules électrochimiques élémentaires peuvent comporter chacune une borne positive et une borne négative, situées chacune à une extrémité opposée de la cellule électrochimique élémentaire, sur un côté de la cellule électrochimique élémentaire différent de celui ou ceux où se situent la ou les électrodes à gaz.

Chaque borne positive ou négative d'une cellule électrochimique élémentaire peut être disposée sur toute la largeur de la cellule électrochimique élémentaire.

La borne positive et/ou la borne négative de chaque cellule électrochimique élémentaire peut enrober l'électrode à gaz associée à l'extrémité de la cellule électrochimique élémentaire, sur toute sa largeur.

Le module peut par ailleurs comporter une partie supérieure et une partie inférieure d'un boîtier présentant des formes adaptées à l'insertion et au maintien des éléments formant des pinces de connexion.

Chaque élément formant une pince de connexion peut se présenter sous la forme d'un seul bloc longiligne.

Chaque élément formant une pince de connexion peut comporter plusieurs griffes de pincement pour recevoir une cellule électrochimique élémentaire associée.

Les cosses et/ou les éléments formant des pinces de connexion peuvent se présenter sous la forme d'une pince comportant sur chaque côté une forme complémentaire, notamment triangulaire, pour permettre le pincement d'une cellule électrochimique élémentaire.

Chaque cosse et/ou chaque élément formant une pince de connexion peut comporter une forme de repli, notamment sous la forme d'une languette repliée, pour permettre le pincement d'une cellule électrochimique élémentaire.

L'invention a également pour objet, selon un autre de ses aspects, un système de stockage d'énergie, caractérisé en ce qu'il comporte un assemblage de plusieurs modules électrochimiques tels que définis précédemment.

L'invention a en outre pour objet, selon un autre de ses aspects, un procédé de réalisation d'un module électrochimique d'assemblage tel que défini précédemment.

Le procédé peut notamment comporter l'étape de réalisation d'un élément formant une pince de connexion à partir d'une plaque, notamment de métal, par exemple en cuivre, découpée en bande, notamment par poinçonnage, ladite bande étant ensuite pliée pour donner sa forme finale à l'élément formant ladite pince de connexion, notamment une forme de double pince. Le pliage peut être réalisé de façon à permettre un retour élastique à l'élément formant une pince de connexion, contribuant au « ressort » de la double pince qu'il forme.

Le procédé peut en outre comporter l'étape, pour un premier élément formant une pince de connexion utilisé pour un montage en série des cellules électrochimiques élémentaires, consistant à recouvrir la plaque d'un dépôt d'un matériau isolant, par exemple un plastique, pour former la partie isolante du premier élément formant une pince de connexion, avant le pliage de ladite bande.

L'ensemble des caractéristiques énoncées dans la présente description peuvent être prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- la figure 1 représente un exemple d'architecture d'une cellule électrochimique élémentaire à double électrode à gaz susceptible d'être incorporée dans un module électrochimique d'assemblage conforme à l'invention,
- les figures 2 et 3 illustrent des possibilités d'agencement des cellules électrochimiques élémentaires au sein d'un module électrochimique d'assemblage conforme à l'invention,
- la figure 4 représente, en vue de dessus, un exemple de cosse utilisée dans un module électrochimique d'assemblage conforme à l'invention,
- la figure 5 représente, en vue de dessus, un exemple de module électrochimique d'assemblage comportant une pluralité de cosses reliées électriquement entre elles par un support de connexion,
- la figure 6 représente, en vue de dessus, un exemple d'élément formant une pince de connexion d'un module électrochimique d'assemblage conforme à l'invention,
- la figure 7 représente, en vue de face, l'insertion d'un élément formant une pince de connexion dans le boîtier d'un module électrochimique d'assemblage conforme à l'invention, dans une configuration de montage en parallèle des cellules électrochimiques élémentaires,
- la figure 8 représente, en vue de dessus, un exemple d'appareillage de deux cellules électrochimiques élémentaires d'un module électrochimique d'assemblage conforme à l'invention, par l'intermédiaire d'un élément formant une pince de connexion, dans une configuration de montage en parallèle des cellules électrochimiques élémentaires,
- la figure 9 représente, en vue de dessus, un exemple de module électrochimique d'assemblage conforme à l'invention présentant un montage en parallèle des cellules électrochimiques élémentaires,
- la figure 10 représente, en vue de dessus, un exemple de réalisation d'un premier élément formant une pince de connexion pour le montage en série de cellules électrochimiques élémentaires dans un module électrochimique d'assemblage conforme à l'invention,
- la figure 11 représente, en vue de dessus, un exemple de réalisation d'un deuxième élément formant une pince de connexion pour le montage en série de cellules électrochimiques élémentaires dans un module électrochimique d'assemblage conforme à l'invention,
- la figure 12 représente, en vue de face, un exemple de deuxième élément formant une pince de connexion pour le montage en série de cellules électrochimiques élémentaires dans un module électrochimique d'assemblage conforme à l'invention,
- la figure 13 représente, en vue de dessus, un exemple de module électrochimique d'assemblage 10 comportant un montage en série des cellules électrochimiques élémentaires 1,
- les figures 14 et 15 représentent, en vue latérale, deux exemples de disposition possibles pour les bornes d'une cellule électrochimique élémentaire d'un module électrochimique d'assemblage conforme à l'invention,
- les figures 16 et 17 représentent une configuration possible des parties supérieure et inférieure du boîtier d'un module électrochimique d'assemblage conforme à l'invention,
- les figures 18 et 19 représentent, respectivement en vue de face et en vue latérale, un premier exemple de configuration d'un élément formant une pince de connexion d'un module électrochimique d'assemblage conforme à l'invention,
- les figures 20 et 21 représentent, respectivement en vue de face et en vue latérale, un deuxième exemple de configuration d'un élément formant une pince de connexion d'un module électrochimique d'assemblage conforme à l'invention,
- les figures 22 et 23 représentent, en vue de dessus, deux exemples de configurations d'éléments formant des pinces de connexion ou de cosses d'un module électrochimique d'assemblage conforme à l'invention, comportant des formes complémentaires pour le pincement des cellules électrochimiques élémentaires,
- les figures 24 et 25 représentent, en vue de dessus, le positionnement d'une cosse et d'un élément formant une pince de connexion comportant des formes complémentaires sur une cellule électrochimique élémentaire, et
- la figure 26 représente, selon une vue en perspective et de dessus, un exemple de cosse ou d'élément formant une pince de connexion d'un module électrochimique d'assemblage 10 conforme à l'invention, comportant une forme de repli sous la forme d'une languette repliée.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

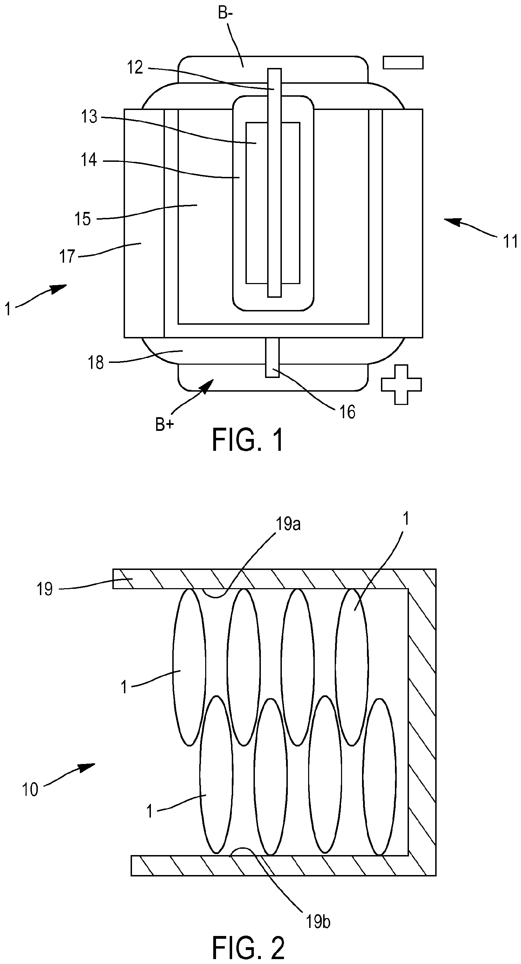

On a représenté sur la figure 1, de façon schématique, un exemple d'architecture de cellule électrochimique élémentaire 1 à double électrode à gaz pouvant être utilisée dans un module électrochimique d'assemblage 10 conforme à l'invention.

De façon préférentielle, la cellule électrochimique élémentaire 1 est de géométrie en sachet, comportant une électrode à gaz sur chaque face. En variante, la cellule électrochimique élémentaire 1 peut présenter un autre type de géométrie d'architecture, et notamment être de géométrie prismatique.

Dans la suite de la description, on considère que la ou les cellules électrochimiques élémentaires 1 sont de géométrie en sachet et du type lithium-air à double électrode à air, électrolyte aqueux et membrane protectrice du lithium métal.

Comme on peut le voir sur la figure 1, le coeur électrochimique 11 de la cellule électrochimique élémentaire 1, situé entre la borne négative B- et la borne positive B+ de la cellule 1, comporte, dans l'ordre de superposition du centre de la cellule 1 vers l'extérieur : un collecteur de courant négatif 12, constitué par exemple par une feuille de cuivre, une feuille de lithium métal 13 recouverte d'une membrane protectrice 14, un séparateur imprégné d'électrolyte 15, un collecteur de courant positif 16, constitué par exemple d'un grille de nickel avec un revêtement hydrophobe, et une couche de diffusion GDL 17 (pour « Gas Diffusion Layer » en anglais) qui favorise la diffusion du gaz de manière homogène à la surface de l'électrode. Cet empilement ainsi obtenu est répété par symétrie par rapport au collecteur de courant négatif 12 de façon à constituer ainsi la double électrode à air. Par ailleurs, la référence 18 sur la figure 1 représente le sachet de la cellule 1 qui correspond à un boîtier souple.

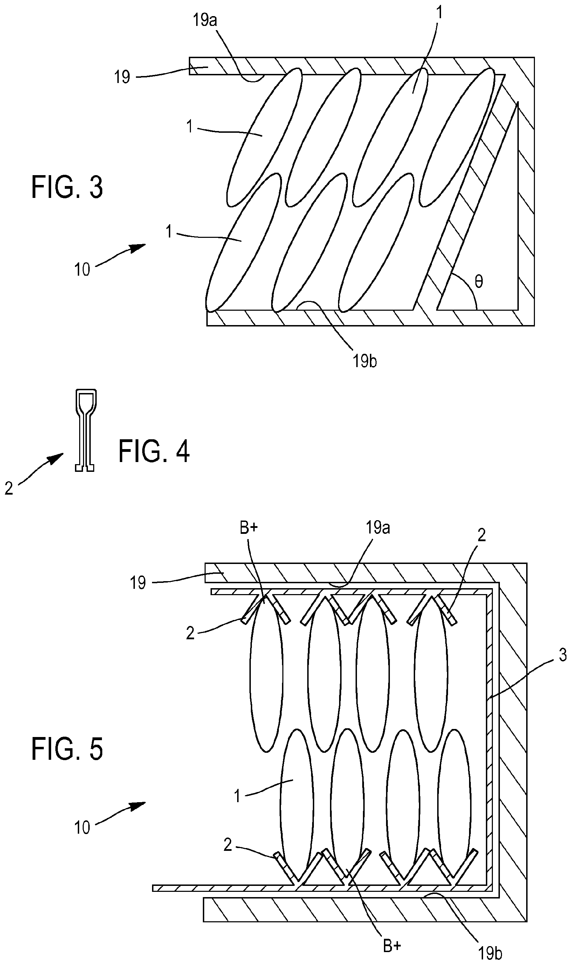

Les figures 2 et 3 illustrent par ailleurs les possibilités d'agencement des cellules électrochimiques élémentaires 1 au sein du module électrochimique d'assemblage 10.

De façon avantageuse, les cellules électrochimiques élémentaires 1 sont assemblées en quinconce à l'intérieur du module électrochimique d'assemblage 10.

La disposition en quinconce des cellules électrochimiques élémentaires 1 dans le module d'assemblage 10 peut permettre de gagner de l'espace tout en permettant au gaz de circuler efficacement.

Plusieurs configurations peuvent être envisagées en variant l'angle d'inclinaison des cellules 1, en particulier en fonction de l'encombrement et des dimensions des cellules 1.

A titre d'exemple, la figure 2 illustre, en vue de dessus (sans la présence des couvercles inférieur et supérieur du module d'assemblage 10), une première configuration de disposition en quinconce des cellules électrochimiques élémentaires 1 dans le module 10, dans laquelle les cellules 1 sont disposées sensiblement perpendiculairement par rapport aux parois internes opposées 19a et 19b du boîtier 19 du module 10.

Par ailleurs, la figure 3 illustre, selon une représentation semblable à celle de la figure 2, une deuxième configuration de disposition en quinconce des cellules électrochimiques élémentaires 1 dans le module 10, dans laquelle les cellules 1 sont disposées par rapport aux parois internes opposées 19a et 19b du boîtier 19 du module 10 avec un angle d'inclinaison θ inférieur à 90°, en particulier sensiblement égal à 45°.

On a par ailleurs représenté sur la figure 4, en vue de dessus, un exemple de cosse 2 utilisée dans le module d'assemblage 10 selon l'invention pour recevoir une borne positive B+ ou négative B- d'une cellule électrochimique élémentaire 1.

La cosse 2 du module 10 présente notamment une forme de pince étroite qui permet le pincement de la cellule 1 placée dans celle-ci. La cosse 2 est préférentiellement réalisée dans un métal conducteur, et peut être mise en forme par découpage et pliage.

La cosse 2 peut être prévue pour s'adapter à l'épaisseur de la cellule 1 qu'elle reçoit, en particulier selon que celle-ci soit de géométrie en sachet ou prismatique.

La hauteur de la cosse 2 est préférentiellement égale à celle de la cellule 1 qui lui est associée, ou en variante, légèrement inférieure, afin d'exercer un effet de pincement sur la plus grande surface possible.

Par ailleurs, la cosse 2 peut être prévue pour exercer un effet de pincement uniquement au niveau de la borne de la cellule 1. En effet, la zone de la cellule 1 pincée ne doit préférentiellement pas dépasser la borne afin de ne pas boucher les électrodes à gaz de la cellule électrochimique 1.

En variante, comme il est décrit par la suite, la cosse 2 peut présenter plusieurs « griffes » de connexion, notamment au moins deux, pouvant pincer la cellule 1 sur une zone dépassant la limite de sa borne de manière plus efficace tout en permettant aux électrodes à gaz de « respirer ».

On a en outre représenté sur la figure 5, en vue de dessus (sans la présence des couvercles inférieur et supérieur du module d'assemblage 10), un exemple de module électrochimique d'assemblage 10 comportant une pluralité de cosses 2 reliées électriquement entre elles par un support de connexion 3.

Les cellules 1 sont reliées électriquement entre elles et fixées dans le boîtier 19 du module 10 par l'intermédiaire des cosses 2 présentes sur les parois internes 19a et 19b du module 10. Les cosses 2 sont situées de façon appropriée pour permettre l'agencement voulu en quinconce des cellules 1 dans le module 10, comme décrit précédemment en référence aux figures 2 et 3.

Avantageusement, il y a dans le module 10 autant de cosses 2 que de cellules électrochimiques élémentaires 1, chaque cellule 1 ayant une borne B+ ou B- fixée par une cosse 2. Néanmoins, conformément à l'invention, toutes les cellules 1 connectent aux cosses 2 leur borne positive B+ ou leur borne négative B-. Autrement dit, les bornes connectées aux cosses 2 sont de même polarité. Par exemple, sur la figure 5, les bornes positives B+ des cellules 1 sont connectées aux cosses 2 du module 10.

De plus, toutes les cosses 2 du module 10 sont connectées électriquement entre elles par un support ou bus de connexion 3.

Le support de connexion 3 peut être constitué par une plaque métallique conductrice rigide, des nappes souples de fils conducteurs, une peinture métallique conductrice, ou tout autre dispositif conducteur électrique, souple ou rigide, le plus fin et léger possible.

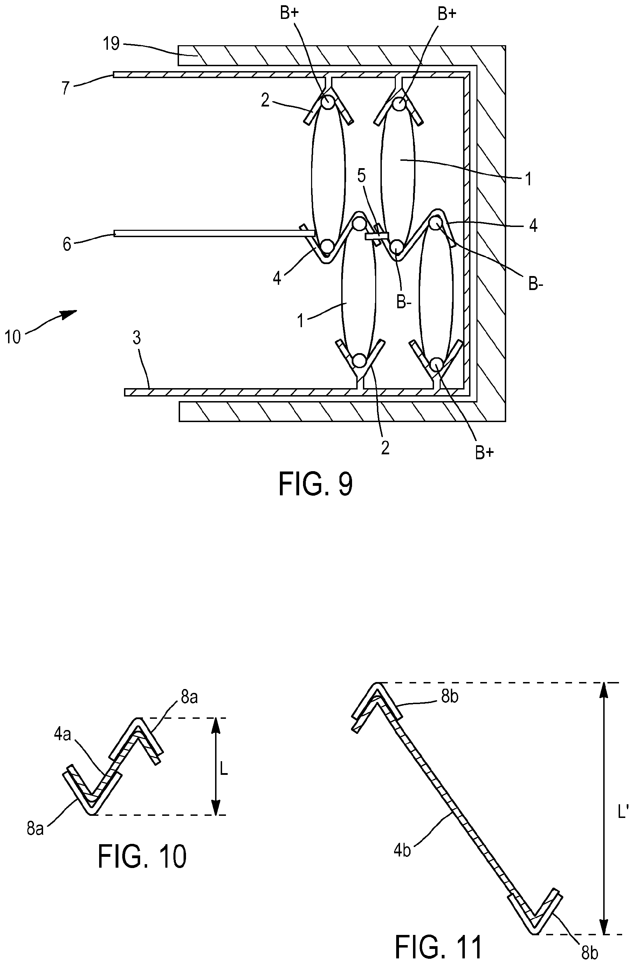

Toutes les cosses 2 du module 10 sont ainsi connectées électriquement entre elles et reliées à une ou des bornes de sorties 7 (voir la figure 9) du module 10 par l'intermédiaire du support de connexion 3.

De façon préférentielle, les cosses 2 du module 10 peuvent être fixées au support de connexion 3 par soudage.

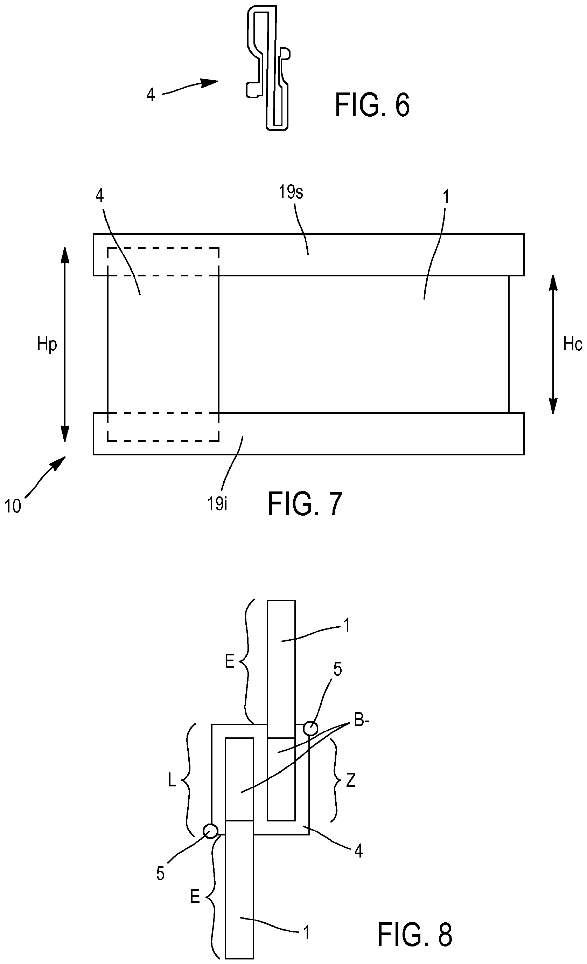

On a maintenant représenté sur la figure 6, en vue de dessus, un exemple d'élément formant une pince de connexion 4 utilisé dans un module d'assemblage 10 conforme à l'invention.

Dans cet exemple, et de façon nullement limitative, l'élément formant une pince de connexion 4, ou la pince de connexion 4, permet de relier électriquement entre elles deux bornes de même polarité de deux cellules électrochimiques élémentaires 1.

Ainsi, chaque cellule 1 du module 10 peut être appariée et maintenue par un élément formant une pince de connexion 4 présentant une forme de double pince de connexion en Z, adaptée à l'épaisseur de la cellule 1 selon sa géométrie, en particulier prismatique ou en sachet.

Les éléments formant des pinces de connexion 4 peuvent tout particulièrement être de deux types en fonction du montage en parallèle ou en série des cellules électrochimiques élémentaires 1 dans le module d'assemblage 10.

On détaille ci-après, respectivement en référence aux figures 6 à 9 et 10 à 13, les configurations des dispositions en parallèle et en série des cellules 1.

### Montage en parallèle des cellules 1 dans le module électrochimique d'assemblage 10

L'élément formant une pince de connexion 4 utilisé pour un montage en parallèle des cellules électrochimiques élémentaires 1 dans le module d'assemblage 10 selon l'invention peut être réalisé dans un matériau conducteur, par exemple en cuivre, et être entièrement conducteur.

L'élément formant une pince de connexion 4 peut alors comporter, sur sa surface extérieure, au moins un dispositif de connexion 5 (voir figure 9 notamment) qui permet de le connecter aux autre éléments formant des pinces de connexion 4, afin d'avoir une connectique en parallèle. A ce titre, toutes les bornes des cellules 1 reliées aux cosses 2 du module d'assemblage 10 sont à un pôle, et toutes les bornes des cellules 1 reliées par les éléments formant des pinces de connexion 4 sont à l'autre pôle.

Le dispositif de connexion 5 peut être de tout type, se présentant par exemple sous une forme de queue d'aronde, trapézoïdale, circulaire, une forme de contact magnétique, de patte de connexion, de ressort, de pince de connexion, entre autres. Avantageusement, le module d'assemblage 10 selon l'invention est prévu pour être démontable. De cette façon, la connexion des éléments formant des pinces de connexion 4 entre eux par des procédés indémontables tels que par soudage ou collage n'est pas souhaitée.

La figure 7 représente, en vue de face, un exemple d'élément formant une pince de connexion 4 inséré dans les parties supérieure 19s et inférieure 19i du boîtier 19 du module d'assemblage 10.

Comme on peut le voir sur cette figure 7, la hauteur Hp de l'élément formant une pince de connexion 4 est supérieure, en particulier légèrement supérieure, à la hauteur Hc de la cellule électrochimique élémentaire 1 de façon à pincer la borne de la cellule 1 sur la plus grande surface possible et de façon à venir se fixer dans les parties supérieure 19s et inférieure 19i du boîtier 19 du module 10.

La figure 8 représente, en vue de dessus, un exemple d'appareillage de deux cellules électrochimiques élémentaires 1 par l'intermédiaire d'un élément formant une pince de connexion 4. La référence Z indique la zone pincée des cellules 1 par l'élément formant une pince de connexion 4.

Comme on peut le voir sur cette figure 8, les deux cellules électrochimiques élémentaires 1 sont avantageusement appariées au niveau de leur borne, par exemple négative B- dans l'exemple représenté, sans dépasser la limite des électrodes à gaz E des cellules 1. De cette façon, il peut être possible de ne pas obturer l'échange de gaz au niveau des cellules 1.

De la même façon, la longueur totale L de l'élément formant une pince de connexion 4 est avantageusement déterminée de façon à permettre la disposition d'une paire de cellules 1 de manière à optimiser l'espace sans obstruer les électrodes à gaz E.

Le montage en parallèle des cellules électrochimiques élémentaires 1 au sein du module électrochimique d'assemblage 10 permet donc de connecter deux cellules 1 entre elles par une borne d'un même pôle, respectivement positif ou négatif, à l'aide d'un élément formant une pince de connexion 4 se présentant sous la forme d'une double pince en Z, l'autre borne, respectivement négative ou positive, étant connectée au module 10 par les cosses 2. Chaque paire de cellules 1 est branchée en parallèle aux autres cellules 1 par contact des éléments formant des pinces de connexion 4 entre eux, en particulier par l'intermédiaire des dispositifs de connexion 5. Ainsi, le module d'assemblage 10 présente deux bornes de sortie de connexion, une borne de sortie 6 à un pôle reliant tous les éléments formant des pinces de connexion 4 entre eux et une borne de sortie 7 au pôle opposé reliant tout les cosses 2 entre elles (voir figure 9).

La figure 9 représente, en vue de dessus (sans présence des couvercles supérieur et inférieur du module), un exemple de module électrochimique d'assemblage 10 comportant un montage en parallèle des cellules électrochimiques élémentaires 1 tel que décrit précédemment.

### Montage en série des cellules 1 dans le module électrochimique d'assemblage 10

Les éléments formant des pinces de connexion utilisés pour le montage en série des cellules électrochimiques élémentaires 1 au sein d'un module électrochimique d'assemblage 10 conforme à l'invention sont de deux types afin d'adapter le module 10 à un branchement en série.

Ainsi, les éléments formant des pinces de connexion comportent un premier groupe de premiers éléments formant des pinces de connexion 4a et un deuxième groupe de deuxièmes éléments formant des pinces de connexion 4b. Les premiers éléments formant des pinces de connexion 4a relient électriquement les bornes B+, B- de deux cellules électrochimiques élémentaires 1 pour former des paires de cellules électrochimiques élémentaires 1, tandis que les deuxièmes éléments formant des pinces de connexion 4b relient électriquement les bornes B+, B- de deux cellules électrochimiques élémentaires appartenant respectivement à deux paires de cellules électrochimiques élémentaires distinctes.

Les premiers éléments formant des pinces de connexion 4a se présentent sous la forme de petites pinces en Z, en particulier semblables aux éléments formant des pinces de connexion 4 utilisés pour le montage en parallèle des cellules électrochimiques élémentaires 1. Elles peuvent ainsi permettre d'appairer deux cellules 1 ensemble de la même manière que pour le montage en parallèle. En revanche, les deuxièmes éléments formant des pinces de connexion 4b se présentent sous la forme de grandes pinces en Z, qui permettent la connexion électrique entre deux paires de cellules 1.

Les premiers 4a et/ou deuxièmes 4b éléments formant des pinces de connexion peuvent être réalisés dans un matériau conducteur, par exemple en cuivre.

Les premiers 4a et deuxièmes 4b éléments formant des pinces de connexion comportent avantageusement une partie extérieure isolante 8a et 8b afin d'éviter la connexion électrique entre les paires de cellules 1 d'une part, et la connexion entre les cellules 1 et le module 10 d'autre part. Cependant, ils assurent une connexion électrique entre les deux cellules 1 qu'ils relient.

De la même façon que ce qui a été décrit précédemment en référence au montage en parallèle des cellules 1, deux cellules 1 appariées ensemble, par un premier 4a ou deuxième 4b élément formant une pince de connexion, sont pincées au niveau de leur borne B+, B-, sans dépasser la limite des électrodes à gaz pour ne pas obturer l'échange de gaz.

On a représenté sur la figure 10, en vue de dessus, un exemple de réalisation d'un premier élément formant une pince de connexion 4a pour le montage en série de cellules électrochimiques élémentaires 1 dans un module électrochimique d'assemblage 10 conforme à l'invention.

Les premiers éléments formant des pinces de connexion 4a, ou encore petites pinces 4a, peuvent globalement présenter la même forme, les mêmes dimensions et/ou les mêmes caractéristiques que les éléments formant des pinces de connexion 4 utilisés pour le montage en parallèle des cellules 1 dans le module 10. Toutefois, ils ne sont pas pourvus de dispositifs de connexion pour les connecter entre eux.

Les petites pinces 4a sont par ailleurs recouvertes d'une partie isolante 8a, de préférence souple, par exemple en un matériau plastique, afin d'empêcher toute connexion entre elles.

De plus, comme il a déjà été indiqué et de la même façon que pour les éléments formant des pinces de connexion 4 utilisés pour le montage en parallèle des cellules 1 dans le module 10, deux cellules électrochimiques élémentaires 1 appariées par une petite pince 4a sont pincées au niveau de leur borne B+ ou B-, sans dépasser la limite des électrodes à gaz. En outre, la longueur totale L d'une petite pince 4a est déterminée de façon à permettre sa disposition de manière à optimiser l'espace sans obstruer les électrodes à gaz. La hauteur d'une petite pince 4a est également préférentiellement supérieure, notamment légèrement supérieure, à celle de la cellule 1 pour pincer sa borne B+ ou B- sur la plus grande surface possible et se fixer dans les parties supérieure 19s et inférieure 19i du boîtier 19 du module 10.

On a en outre représenté sur la figure 11, en vue de dessus, un exemple de réalisation d'un deuxième élément formant une pince de connexion 4b pour le montage en série de cellules électrochimiques élémentaires 1 dans un module électrochimique d'assemblage 10 conforme à l'invention.

Les deuxièmes éléments formant des pinces de connexion 4b, ou encore grandes pinces 4b, sont utilisés pour connecter électriquement entre elles deux paires de cellules électrochimiques élémentaires 1 réalisées à partir de leur connexion avec une petite pince 4a. Leur longueur L' est donc égale à la longueur totale de deux cellules 1 appariées par une petite pince 4a.

Une grande pince 4b s'intercale entre les cosses 2 du module 10 et les bornes B+ ou B- des deux paires de cellules 1 qu'elle relie électriquement, afin de les isoler électriquement du module 10 par la partie isolante 8b, conçue avantageusement dans le même matériau que celui des petites pinces 4a, tout en les connectant entre elles. Plus particulièrement, les grandes pinces 4b s'intercalent chacune entre une borne B+, Bd'une cellule électrochimique élémentaire 1 d'une première paire de cellules électrochimiques élémentaires 1, appariées par une petite pince 4a, et la cosse 2 correspondante de la cellule électrochimique élémentaire 1, et entre une borne B+, Bd'une autre cellule électrochimique élémentaire 1 d'une deuxième paire de cellules électrochimiques élémentaires 1, distincte de la première paire, appariées par une petite pince 4a, et la cosse 2 correspondante de l'autre cellule électrochimique élémentaire 1.

Par ailleurs, de la même façon que pour les petites pinces 4a, deux cellules 1 appariées par une grande pince 4b sont pincées au niveau de leur borne B+, B-, sans dépasser la limite des électrodes à gaz.

De plus, la hauteur d'une grande pince 4b est inférieure, notamment légèrement inférieure, à celle de la cellule 1 pour pincer sa borne sur la plus grand surface possible, tout en étant supérieure, notamment légèrement supérieure, à la hauteur d'une cosse 2 du module 10 afin d'empêcher tout court-circuit.

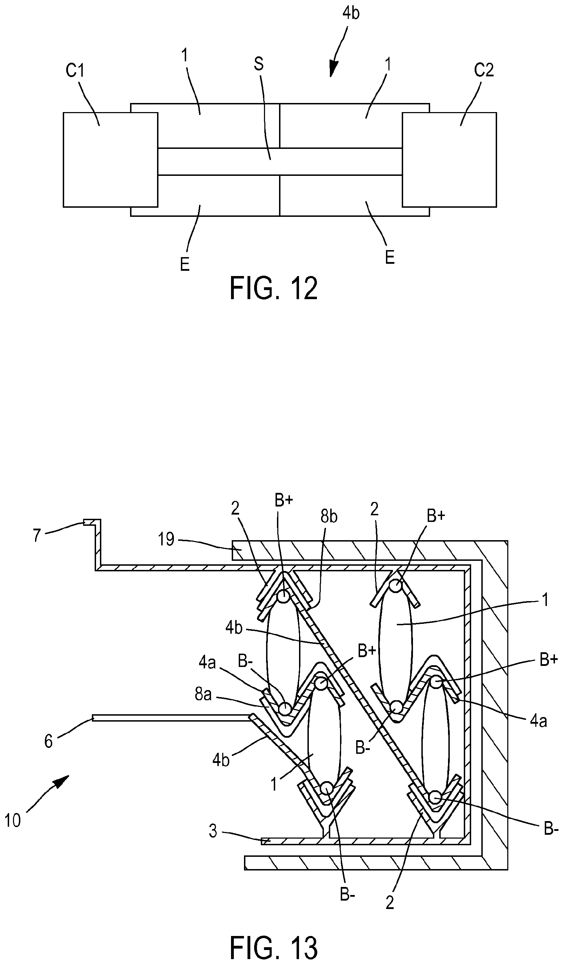

La figure 12 représente schématiquement, en vue de face, un exemple de grande pince 4b pour la connexion de deux paires de cellules 1.

Comme on peut le voir sur cette figure 12, les deux connexions C1 et C2 d'une grande pince 4b, où sont reçues respectivement les bornes des deux cellules 1, sont reliées par une surface conductrice S, souple ou rigide, et de préférence fine et recouverte d'une gaine isolante (non représentée), et de largeur très inférieure à celle de la cellule 1, afin de minimiser l'obstruction de l'électrode à gaz E tout en assurant une connexion suffisante.

Ainsi, dans un montage en série des cellules électrochimiques élémentaires 1, chaque cellule 1 est reliée à la suivante par alternativement une petite pince 4a et une grande pince 4B. Une première cellule 1 est fixée par une cosse 2 au module 10, reliée à la borne de sortie 7 du module 10, et l'autre borne de sortie 6 passe par une double pince, petite pince 4a ou grande pince 4b, selon le module 10 et le nombre de cellules 1.

La figure 13 représente, en vue de dessus (sans la présence des couvercles supérieur et inférieur du module), un exemple de module électrochimique d'assemblage 10 comportant un montage en série des cellules électrochimiques élémentaires 1.

On va maintenant décrire ci-après des configurations possibles pour les bornes positive B+ ou négative B- des cellules électrochimiques élémentaires 1.

En effet, afin d'avoir une connexion et une fixation optimales entre la cellule 1 et le ou les éléments formant des pinces de connexion 4, 4a, 4b, ainsi qu'entre la cellule 1 et la cosse 2 du module 10, les bornes B+, B- de la cellule 1 doivent avoir avantageusement une forme qui s'adapte facilement, de manière complémentaire ou non à la cosse 2 ou à l'élément formant une pince de connexion 4, 4a, 4b.

De plus, dans le cas précis d'une cellule 1 de géométrie en sachet, il est souhaitable de rigidifier les bornes B+, B- afin de les rendre facilement fixables, tout en gardant l'intérêt d'une cellule 1 souple et légère (sans utilisation d'un boîtier par exemple).

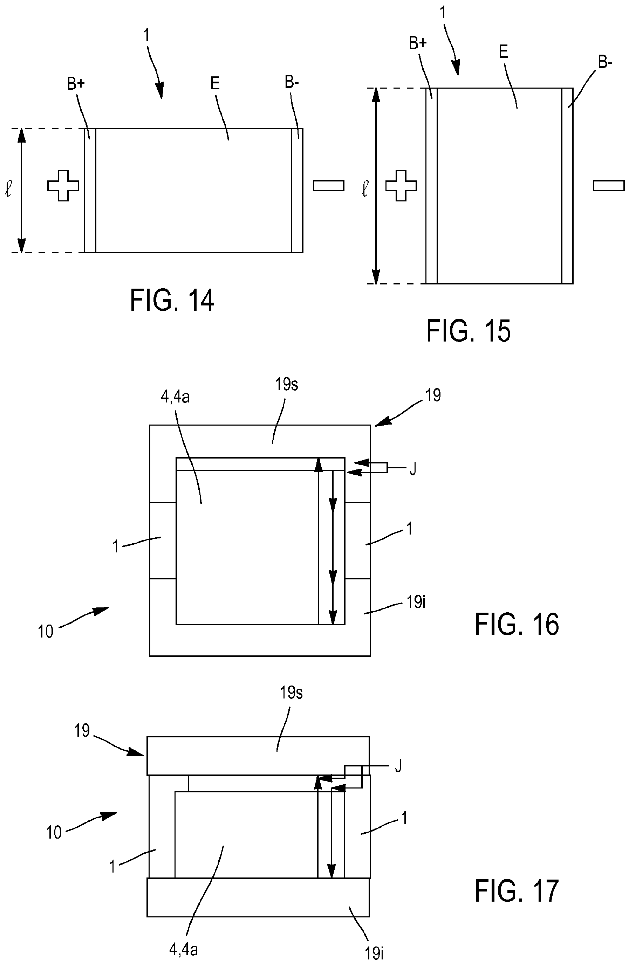

Les figures 14 et 15 représentent ainsi, en vue latérale, deux exemples de disposition possibles pour les bornes d'une cellule électrochimique élémentaire 1 d'un module électrochimique d'assemblage 10 conforme à l'invention.

La cellule 1 comporte ainsi deux bornes positive B+ et négative B-, situées chacune à une extrémité opposée de la cellule 1, sur un côté de la cellule 1 différent de ceux où se situent les électrodes à gaz. De façon préférentielle, les bornes B+, B- sont disposées sur toute la largeur l de la cellule 1 afin d'avoir une surface de connexion et une fixation maximales. Les bornes présentent ainsi une forme globalement longiligne, leur section pouvant varier pour s'adapter à l'élément formant une pince de connexion.

On va maintenant décrire ci-après la configuration spécifique souhaitable du boîtier 19 du module électrochimique d'assemblage 10 selon l'invention.

Les figures 16 et 17 représentent ainsi la configuration possible des parties supérieure 19s et inférieure 19i du boîtier 19 d'un module électrochimique d'assemblage 10 conforme à l'invention.

Comme on peut le voir sur ces figures 16 et 17, les parties supérieure 19s et inférieure 19i du boîtier 19 du module 10 présentent des formes permettant l'insertion et le maintien en position des éléments formant des pinces de connexion 4, 4a, 4b, et notamment des éléments formant des pinces de connexion 4 pour un montage en parallèle et des premiers éléments formant des pinces de connexion 4a pour un montage en série. Ces formes peuvent par exemple être définies par des rainures, des pions, des trous, entre autres, afin de maintenir en tension les pinces 4, 4a et assurer ainsi le pincement et la connexion des cellules 1.

Par ailleurs, les parties supérieure 19s et inférieure 19i du boîtier 19 permettent également d'assurer un appui sur les cellules 1 pour empêcher leur déplacement longitudinal. Avantageusement, il existe ainsi un jeu J entre la pince 4, 4a et les parties supérieure 19s et inférieure 19i. Ainsi, la fixation de la pince 4, 4a entre les parties supérieure 19s et inférieure 19i présente un faible jeu assurant le contact des cellules 1 avec les parties supérieure 19s et inférieure 19i. Le jeu peut dépendre de la configuration envisagée pour le maintien en position de la pince 4, 4a compressée à l'aide des parties supérieure 19s et inférieure 19i du module 10.

On va maintenant décrire ci-après des exemples de configurations particulières pour le module électrochimique d'assemblage 10 selon l'invention.

En effet, différentes configurations pour les éléments formant des pinces de connexion 4, 4a, 4b et les bornes B+, B- des cellules électrochimiques élémentaires 1 peuvent être envisagées, notamment en fonction des applications, des dimensions, des matériaux ou des procédés de réalisation.

### Configurations possibles de l'élément formant une pince de connexion 4 pour montage en parallèle ou 4a pour montage en série

Cet élément formant une pince de connexion 4 ou 4a, tel que décrit précédemment, est encore appelé petite pince 4, 4a.

La petite pince 4, 4a, plus précisément double pince, présente préférentiellement une forme longiligne, de section en forme de Z. Elle est préférentiellement réalisée dans un matériau conducteur électrique, notamment du cuivre ou un de ses alliages.

Dans un mode préférentiel de réalisation, la petite pince 4, 4a est obtenue à partir d'une plaque de cuivre découpée en bande, par exemple par poinçonnage, ladite bande étant ensuite pliée pour donner sa forme finale de double pince en veillant à ce que le pliage permette un certain retour élastique, contribuant ainsi au « ressort » de la pince. Pour une petite pince 4a utilisée pour un montage en série des cellules 1, la plaque de cuivre est préférentiellement recouverte par dépôt d'un matériau isolant, par exemple un plastique, sur les zones à isoler pour former la partie isolante 8a, avant l'étape de pliage.

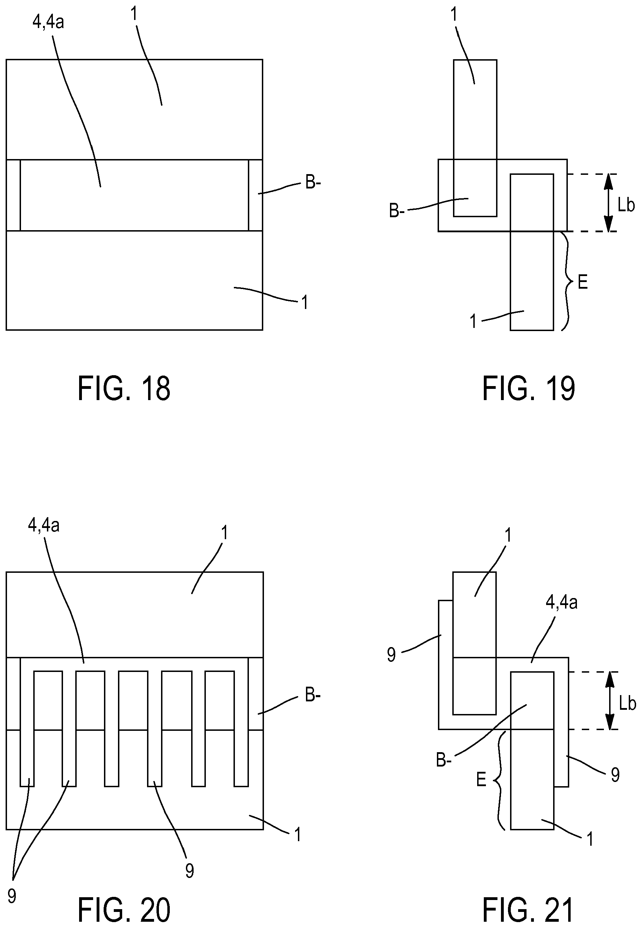

Les figures 18 et 19 d'une part, et les figures 20 et 21 d'autre part, représentent deux exemples de configurations possibles pour la petite pince 4 utilisée pour un montage en parallèle des cellules 1 ou la petite pince 4a utilisée pour un montage en série des cellules 1. Selon ces deux configurations, la largeur de la petite pince 4, 4a varie.

Les figures 18 et 19 représentent, respectivement en vue de face et en vue latérale, un premier exemple de configuration d'une petite pince 4, 4a, dans laquelle la petite pince 4, 4a se présente sous la forme d'un seul bloc longiligne.

De plus, la petite pince 4, 4a est prévue pour pincer les bornes, ici négatives B-, des cellules 1 sur toute leur longueur L_{b}. Préférentiellement, la petite pince 4, 4a ne dépasse pas sur l'électrode à gaz E pour ne pas obstruer l'arrivée de gaz.

Les figures 20 et 21 représentent, respectivement en vue de face et en vue latérale, un deuxième exemple de configuration d'une petite pince 4, 4a, dans laquelle la petite pince 4, 4a présente plusieurs griffes de pincement 9, au moins deux, pour permettre de mieux pincer la cellule 1 sans obstruer l'électrode à gaz E.

Chaque griffe de pincement 9 peut dépasser sur l'électrode à gaz E si elle peut être suffisamment fine pour ne pas obstruer l'électrode à gaz E. Préférentiellement, chaque griffe de pincement 9 doit présenter une largeur réduite et le nombre total des griffes de pincement 9 de chaque petite pince 4, 4a doit être limité afin de ne pas, ou presque pas, obstruer l'électrode à gaz E, tout en ayant des dimensions et un nombre suffisant pour assurer un pincement et une connexion suffisants selon l'application, notamment en cas de vibrations.

On va maintenant décrire ci-après plusieurs solutions possibles pour maintenir un élément formant une pince de connexion 4, 4a, 4b, ou double pince, en compression, c'est-à-dire en position pincée, afin de mieux fixer les cellules électrochimiques élémentaires 1 qu'il connecte entre elles.

Dans une première solution, la double pince 4, 4a, 4b elle-même possède un pion à chaque extrémité, lesdits pions étant avantageusement obtenus par pliage. Les couvercles supérieur 19s et inférieur 19i du boîtier 19 du module 10 présentent des trous de même dimension que lesdits pions, lesdits trous étant ajustés glissant pour pouvoir y insérer lesdits pions. Lesdits trous sont avantageusement disposés de façon à ce que la double pince 4, 4a, 4b soit maintenue en position pincée lorsqu'on insère lesdits pions dans lesdits trous des couvercles supérieur 19s et inférieur 19i du boîtier 19 du module 10.

Dans une deuxième solution, la double pince 4, 4a, 4b présente à ses extrémités un enroulement, préférentiellement obtenu par pliage. Les couvercles supérieur 19s et inférieur 19i du boîtier 19 du module 10 possèdent des pions de même dimension que lesdits enroulements, lesdits pions étant ajustés glissant pour pouvoir y positionner lesdits enroulements. Lesdits pions sont avantageusement disposés de façon à ce que la double pince 4, 4a, 4b soit maintenue en position pincée lorsqu'on positionne lesdits enroulements autour desdits pions des couvercles supérieur 19s et inférieur 19i du boîtier 19 du module 10.

Dans une troisième solution, il peut être possible, à la place d'insérer des pions, de réaliser dans les couvercles supérieur 19s et inférieur 19i du boîtier 19 du module 10 des rainures ayant la forme de l'emprunte du profil des doubles pinces 4, 4a, 4b dans une configuration compressée. Cette solution nécessite que la hauteur de la double pince 4, 4a, 4b soit supérieure à celle de la cellule 1 pour pouvoir être insérée dans les couvercles 19s et 19i du module 10. Il faut également veiller à ce qu'il y ait un jeu entre la double pince 4, 4a, 4b et les couvercles 19s et 19i du module 10 pour assurer un contact entre les cellules 1 et les couvercles 19s et 19i, afin d'éviter tout phénomène de vibration des cellules 1.

Dans une quatrième solution, on utilise des tiges extrudées à insérer dans les trous décrits dans la première solution. On peut également utiliser des plaques découpées, les trous présentant alors la forme de la section d'une desdites plaques. En insérant les tiges, ou les plaques, entre les couvercles supérieur 19s et inférieur 19i du boîtier 19 du module 10, on maintient en position compressée la double pince 4, 4a, 4b. Cette solution est préférée pour une double pince 4, 4a présentant des griffes de pincement 9 telles que décrites précédemment.

Dans une cinquième solution, il peut être possible d'insérer une patte de fixation sur les pinces d'une double pince 4, 4a, 4b pour en maintenir le pincement. Cette solution peut être employée pour les cellules 1 de géométrie en sachet ayant une faible épaisseur, afin d'assurer le pincement. Ce peut être également une solution de sécurité pour empêcher la déconnexion intempestive des cellules 1 pour certaines applications, notamment en cas de chocs ou de vibrations. Cette solution peut s'adapter à une double pince 4, 4a présentant des griffes de pincement 9 telles que décrites précédemment, la patte de fixation devant alors être suffisamment longue pour maintenir toutes les griffes de pincement 9 de la double pince 4, 4a.

Plusieurs de ces solutions peuvent également être combinées ensembles pour obtenir un pincement satisfaisant, suivant les contraintes de l'application visée.

Dans le cas plus spécifique des doubles pinces 4 utilisées pour un montage en parallèle des cellules 1, il faut veiller à ce que la connexion entre les doubles pinces 4 soit assurée, et ce peu importe les contraintes d'utilisation (chocs, vibrations) pouvant amener à des déconnexions intempestives. Plusieurs solutions sont envisagées pour assurer la connexion entre des éléments formant des pinces de connexion ou doubles pinces 4 pour un montage en parallèle.

Une première solution consiste à employer une peinture ou un revêtement magnétique, cependant cette solution n'est pas nécessairement très performante en termes de conduction électrique et les propriétés magnétiques peuvent être insuffisantes pour assurer la connexion en cas de chocs ou vibrations.

Une deuxième solution consiste à utiliser des pattes de connexion pour relier les doubles pinces 4 entre elles, lesdites pattes étant obtenues dans un matériau conducteur et assurant une connexion entre deux doubles pinces 4. Cette solution peut être une solution de sécurité pour empêcher la déconnexion intempestive des cellules 1 pour certaines applications, notamment en cas de chocs ou de vibrations.

Une troisième solution consiste à utiliser sur le côté de double pince 4 une forme de collerette ou de patte, obtenue directement lors de la découpe et de la mise en forme de la double pince 4 dans une plaque d'un matériau conducteur. La collerette ou la patte peut alors être rabattue sur la double pince 4 suivante afin d'assurer le contact électrique entre elles. La forme et l'épaisseur doivent être conçues pour permettre un pliage aisé de ladite collerette ou patte, tout en assurant leur maintien et, sans retrait élastique, une résistance suffisante. La double pince 4 peut également présenter à ses surfaces latérales respectivement une patte ou un ressort ou une languette ou une butée, qui assure le contact avec respectivement la patte ou le ressort ou la languette ou la butée de la double pince 4 suivante. Le contact entre les doubles pinces 4, et donc le maintien de la connexion électrique, est assuré en maintenant les cellules 1 pincées en compression dans le module 10.

On va maintenant décrire ci-après des principes concernant la mise et le maintien en position d'une cellule électrochimique élémentaire 1 dans un module électrochimique d'assemblage 10 conforme à l'invention.

Pour assurer le maintien en position de la cellule 1 par ses bornes B+ et B-pincées, plusieurs solutions sont possibles au niveau de la pince, ces solutions étant les mêmes que ce soit pour les cosses 2, qui se présentent sous la forme de pinces, ou pour les éléments formant des pinces de connexion 4, 4a, 4b qui se présentent sous la forme de doubles pinces.

Ainsi, une première solution consiste à donner une forme complémentaire 21 à chaque côté de la pince 4, 4a, 4b ou 2. Ainsi, la borne B+ ou B- de la cellule 1 est maintenue en traction par compression (pincement) de la pince, et notamment par le cisaillement engendré par ladite forme 21 sur la borne B+ ou B- de la cellule 1.

La forme complémentaire 21 peut préférentiellement être celle d'un triangle.

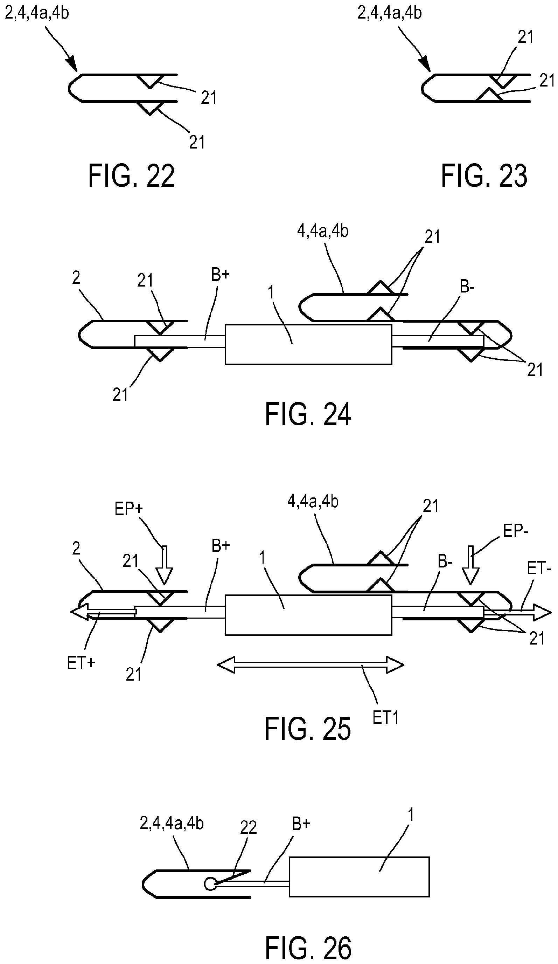

Les deux formes complémentaires 21 sur chaque côté de la pince 4, 4a, 4b ou 2 peuvent être en vis-à-vis, comme représenté sur la figure 22. En variante, les deux formes complémentaires 21 peuvent être décalées en quinconce, comme représenté sur la figure 23.

La borne B+ ou B- de la cellule 1 pour une telle première solution est de préférence plate.

Les figures 24 et 25 représentent par ailleurs, en vue de dessus, le positionnement d'une cosse 2 comportant des formes complémentaires 21 sur la borne positive B+ d'une cellule électrochimique élémentaire 1 et le positionnement d'un élément formant une pince de connexion 4, 4a sur la borne négative B- de la cellule électrochimique élémentaire 1.

Sur la figure 25 plus précisément, les références EP+, ET+, ET1, EP- et ET-représentent respectivement l'effort de pincement de la cosse 2 sur la borne positive B+, l'effort de traction résultant sur la borne positive B+, l'effort de traction résultant sur la cellule 1, l'effort de pincement de l'élément formant une pince de connexion 4 sur la borne négative B- et l'effort de traction résultant sur la borne négative B-.

Une deuxième solution consiste à utiliser avantageusement sur les côtés de la pince 4, 4a, 4b ou 2 une forme de repli 22 engendrant un ressort naturel maintenant la cellule 1 en traction. La forme de repli 22 peut notamment être une languette repliée. La borne B+ ou B- doit cependant avoir une forme lui permettant d'être tirée par ladite forme de repli 22 de la pince 4, 4a, 4b ou 2, ladite borne B+ ou B- ayant alors préférablement une forme bombée.

La figure 26 représente, selon une vue en perspective et de dessus, un exemple de cosse 2 ou d'élément formant une pince de connexion 4, 4a, 4b comportant une forme de repli 22 sous la forme d'une languette repliée. La cellule 1 présente par ailleurs une borne positive B+ de forme bombée.

La borne positive B+ ou négative B- de chaque cellule électrochimique élémentaire 1 peut être de forme quelconque, et notamment plate ou cylindrique. Elle enrobe avantageusement l'électrode à gaz à l'extrémité de la cellule 1 sur toute sa largeur. La forme de la borne B+ ou B- correspond avantageusement à la forme en Z de la pince 4, 4a, 4b pour permettre une connexion optimale.

Bien entendu, l'invention n'est pas limitée aux exemples de réalisation qui viennent d'être décrits. Diverses modifications peuvent y être apportées par l'homme du métier.

L'expression « comportant un » doit être comprise comme étant synonyme de « comportant au moins un », sauf si le contraire est spécifié.

## Revendications

1. Module électrochimique d'assemblage (10) d'un système de stockage d'énergie, comportant un assemblage de plusieurs cellules électrochimiques élémentaires (1) à électrode à gaz (E), notamment à double électrode à gaz, **caractérisé en ce qu'**il comporte :
- une pluralité de cosses (2) associées respectivement à la pluralité de cellules électrochimiques élémentaires (1), les cosses (2) étant reliées entre elles par un support de connexion (3) et recevant les bornes (B+, B-) des cellules électrochimiques élémentaires (1) de sorte que lesdites bornes (B+, B-) soient toutes électriquement reliées entre elles par le support de connexion (3),
- une pluralité d'éléments formant des pinces de connexion (4, 4a, 4b) recevant chacun au moins deux bornes (B+, B-) d'au moins deux cellules électrochimiques élémentaires (1) de sorte que lesdites au moins deux bornes (B+, B-) soient électriquement reliées entre elles par l'élément formant une pince de connexion (4) qui leur est associé.

2. Module selon la revendication 1, **caractérisé en ce que** les cellules électrochimiques élémentaires (1) sont disposées en quinconce au sein du module électrochimique d'assemblage (10).

3. Module selon la revendication 1 ou 2, **caractérisé en ce que** lesdits éléments formant des pinces de connexion (4, 4a, 4b) présentent une forme de double pince en Z.

4. Module selon l'une quelconque des revendications précédentes, **caractérisé en ce que** les cellules électrochimiques élémentaires (1) sont montées en parallèle au sein du module électrochimique d'assemblage (10).

5. Module selon la revendication 4, **caractérisé en ce que** les cosses (2) reçoivent les bornes (B+, B-) de même polarité des cellules électrochimiques élémentaires (1) et **en ce que** les éléments formant des pinces de connexion (4) reçoivent chacun au moins deux bornes (B-, B+) de même polarité, opposée à la polarité des bornes (B+, B-) des cellules électrochimiques élémentaires (1) reçues dans les cosses (2).

6. Module selon la revendication 4 ou 5, **caractérisé en ce que** lesdits éléments formant des pinces de connexion (4) sont électriquement reliés entre eux par l'intermédiaire de dispositifs de connexion (5) des éléments formant des pinces de connexion (4).

7. Module selon l'une quelconque des revendications 1 à 3, **caractérisé en ce que** les cellules électrochimiques élémentaires (1) sont montées en série au sein du module électrochimique d'assemblage (10).

8. Module selon la revendication 7, **caractérisée en ce que** les éléments formant des pinces de connexion (4) comportent un premier groupe de premiers éléments formant des pinces de connexion (4a) et un deuxième groupe de deuxièmes éléments formant des pinces de connexion (4b), les premiers éléments formant des pinces de connexion (4a) reliant électriquement les bornes (B+, B-) de deux cellules électrochimiques élémentaires (1) pour former des paires de cellules électrochimiques élémentaires (1), et les deuxièmes éléments formant des pinces de connexion (4b) reliant électriquement les bornes (B+, B-) de deux cellules électrochimiques élémentaires (1) appartenant respectivement à deux paires de cellules électrochimiques élémentaires (1) distinctes.

9. Module selon la revendication 7 ou 8, **caractérisé en ce que** les premiers éléments formant des pinces de connexion (4a) et les deuxièmes éléments formant des pinces de connexion (4b) comportent respectivement des premières (8a) et deuxièmes (8b) parties isolantes pour ne permettre la connexion électrique qu'entre les cellules électrochimiques élémentaires (1) qu'ils relient entre elles respectivement.

10. Module selon l'une des revendications 7 à 9, **caractérisé en ce que** les deuxièmes éléments formant des pinces de connexion (4b) s'intercalent chacune entre une borne (B+, B-) d'une cellule électrochimique élémentaire (1) d'une première paire de cellules électrochimiques élémentaires (1), appariées par un premier élément formant une pince de connexion (4a), et la cosse (2) correspondante de la cellule électrochimique élémentaire (1), et entre une borne (B+, B-) d'une autre cellule électrochimique élémentaire (1) d'une deuxième paire de cellules électrochimiques élémentaires (1), distincte de la première paire, appariées par un premier élément formant une pince de connexion (4a), et la cosse (2) correspondante de l'autre cellule électrochimique élémentaire (1).

11. Module selon l'une quelconque des revendications 1 à 10, **caractérisé en ce que** chaque élément formant une pince de connexion (4, 4a) comporte plusieurs griffes de pincement (9) pour recevoir une cellule électrochimique élémentaire (1) associée.

12. Module selon l'une quelconque des revendications précédentes, **caractérisé en ce que** les cosses (2) et/ou les éléments formant des pinces de connexion (4, 4a, 4b) se présentent sous la forme d'une pince comportant sur chaque côté une forme complémentaire (21), notamment triangulaire, pour permettre le pincement d'une cellule électrochimique élémentaire (1).

13. Module selon l'une quelconque des revendications précédentes, **caractérisé en ce que** chaque cosse (2) et/ou chaque élément formant une pince de connexion (4, 4a, 4b) comporte une forme de repli (22), notamment sous la forme d'une languette repliée, pour permettre le pincement d'une cellule électrochimique élémentaire (1).

14. Procédé de réalisation d'un module électrochimique d'assemblage (10) selon l'une quelconque des revendications précédentes, **caractérisé en ce qu'**il comporte l'étape de réalisation d'un élément formant une pince de connexion (4, 4a) à partir d'une plaque découpée en bande, ladite bande étant ensuite pliée pour donner sa forme finale à l'élément formant une pince de connexion (4, 4a).

15. Procédé selon la revendication 14, le module électrochimique d'assemblage étant selon la revendication 9, le procédé comportant l'étape, pour un premier élément formant une pince de connexion (4a) utilisé pour un montage en série des cellules électrochimiques élémentaires (1), consistant à recouvrir la plaque d'un dépôt d'un matériau isolant pour former la partie isolante (8a) du premier élément formant une pince de connexion (4a), avant le pliage de ladite bande.

## Patentansprüche

1. Elektrochemisches Anordnungsmodul (10) für ein Energiespeichersystem, umfassend eine Anordnung von mehreren elektrochemischen Elementarzellen (1) mit Gaselektrode (E), insbesondere mit Doppelgaselektrode, **dadurch gekennzeichnet, dass** es umfasst:
- eine Mehrzahl von Hülsen (2), die jeweils der Mehrzahl von elektrochemischen Elementarzellen (1) zugeordnet sind, wobei die Hülsen (2) miteinander durch einen Verbindungsträger (3) verbunden sind und die Anschlüsse (B+, B-) der elektrochemischen Elementarzellen (1) derart aufnehmen, dass die Anschlüsse (B+, B-) alle elektrisch miteinander durch den Verbindungsträger (3) verbunden sind,
- eine Mehrzahl von Elementen, die Verbindungsklemmen (4, 4a, 4b) bilden, die jeweils wenigstens zwei Anschlüsse (B+, B-) von wenigstens zwei elektrochemischen Elementarzellen (1) derart aufnehmen, dass die wenigstens zwei Anschlüsse (B+, B-) elektrisch miteinander durch das Element verbunden sind, das eine Verbindungsklemme (4) bildet, das ihnen zugeordnet ist.

2. Modul nach Anspruch 1, **dadurch gekennzeichnet, dass** die elektrochemischen Elementarzellen (1) in dem elektrochemischen Anordnungsmodul (10) in Quincunx-Anordnung angeordnet sind.

3. Modul nach Anspruch 1 oder 2, **dadurch gekennzeichnet, dass** die Elemente, die Verbindungsklemmen (4, 4a, 4b) bilden, eine Z-Doppelklemmenform aufweisen.

4. Modul nach einem der vorhergehenden Ansprüche, **dadurch gekennzeichnet, dass** die elektrochemischen Elementarzellen (1) parallel in dem elektrochemischen Anordnungsmodul (10) montiert sind.

5. Modul nach Anspruch 4, **dadurch gekennzeichnet, dass** die Hülsen (2) die Anschlüsse (B+, B-) gleicher Polarität der elektrochemischen Elementarzellen (1) aufnehmen, und dass die Elemente, die Verbindungsklemmen (4) bilden, jeweils wenigstens zwei Anschlüsse (B-, B+) gleicher Polarität aufnehmen, die entgegengesetzt ist zur Polarität der Anschlüsse (B+, B-) der elektrochemischen Elementarzellen (1), die in den Hülsen (2) aufgenommen sind.

6. Modul nach Anspruch 4 oder 5, **dadurch gekennzeichnet, dass** die Elemente, die Verbindungsklemmen (4) bilden, elektrisch miteinander mit Hilfe von Verbindungsvorrichtungen (5) der Elemente verbunden sind, die Verbindungsklemmen (4) bilden.

7. Modul nach einem der Ansprüche 1 bis 3, **dadurch gekennzeichnet, dass** die elektrochemischen Elementarzellen (1) in Reihe in dem elektrochemischen Anordnungsmodul (10) montiert sind.

8. Modul nach Anspruch 7, **dadurch gekennzeichnet, dass** die Elemente, die Verbindungsklemmen (4) bilden, eine erste Gruppe von ersten Elementen umfassen, die Verbindungsklemmen (4a) bilden, und eine zweite Gruppe von zweiten Elementen, die Verbindungsklemmen (4b) bilden, wobei die ersten Elemente, die Verbindungsklemmen (4a) bilden, elektrisch die Anschlüsse (B+, B-) von zwei elektrochemischen Elementarzellen (1) verbinden, um Paare von elektrochemischen Elementarzellen (1) zu bilden, und die zweiten Elemente, die Verbindungsklemmen (4b) bilden, elektrisch die Anschlüsse (B+, B-) von zwei elektrochemischen Elementarzellen (1) verbinden, die jeweils zu zwei unterschiedlichen Paaren von elektrochemischen Elementarzellen (1) gehören.

9. Modul nach Anspruch 7 oder 8, **dadurch gekennzeichnet, dass** die ersten Elemente, die Verbindungsklemmen (4a) bilden, und die zweiten Elemente, die Verbindungsklemmen (4b) bilden, erste (8a) beziehungsweise zweite (8b) isolierende Teile umfassen, um die elektrische Verbindung nur zwischen den elektrochemischen Elementarzellen (1) zu erlauben, die sie jeweils miteinander verbinden.

10. Modul nach einem der Ansprüche 7 bis 9, **dadurch gekennzeichnet, dass** die zweiten Elemente, die Verbindungsklemmen (4b) bilden, jeweils eingefügt sind zwischen einem Anschluss (B+, B-) einer elektrochemischen Elementarzelle (1) eines ersten Paars von elektrochemischen Elementarzellen (1), die durch ein erstes Element, das eine Verbindungsklemme (4a) bildet, zu einem Paar zusammengestellt sind, und der entsprechenden Hülse (2) der elektrochemischen Elementarzelle (1), und zwischen einem Anschluss (B+, B-) einer anderen elektrochemischen Elementarzelle (1) eines zweiten Paars von elektrochemischen Elementarzellen (1), das von dem ersten Paar verschieden ist, die durch ein erstes Element, das eine Verbindungsklemme (4a) bildet, zu einem Paar zusammengestellt wird, und der entsprechenden Hülse (2) der anderen elektrochemischen Elementarzelle (1).

11. Modul nach einem der Ansprüche 1 bis 10, **dadurch gekennzeichnet, dass** jedes Element, das eine Verbindungsklemme (4, 4a) bildet, mehrere Klemmgreifer (9) umfasst, um eine zugeordnete elektrochemische Elementarzelle (1) aufzunehmen.

12. Modul nach einem der vorhergehenden Ansprüche, **dadurch gekennzeichnet, dass** die Hülsen (2) und/oder die Elemente, die Verbindungsklemmen (4, 4a, 4b) bilden, die Form einer Klemme aufweisen, die auf jeder Seite eine komplementäre, insbesondere dreieckige Form (21) umfasst, um das Einklemmen einer elektrochemischen Elementarzelle (1) zu erlauben.

13. Modul nach einem der vorhergehenden Ansprüche, **dadurch gekennzeichnet, dass** jede Hülse (2) und/oder jedes Element, das eine Verbindungsklemme (4, 4a, 4b) bildet, eine Faltungsform (22) umfasst, insbesondere in Form einer gefalteten Zunge, um das Einklemmen einer elektrochemischen Elementarzelle (1) zu erlauben.

14. Verfahren zur Herstellung eines elektrochemischen Anordnungsmoduls (10) nach einem der vorhergehenden Ansprüche, **dadurch gekennzeichnet, dass** es den Schritt der Herstellung eines Elements, das eine Verbindungsklemme (4, 4a) bildet, ausgehend von einer als Band geschnittenen Platte umfasst, wobei das Band anschließend gefaltet wird, um dem Element, das eine Verbindungsklemme (4, 4a) bildet, seine endgültige Form zu verleihen.

15. Verfahren nach Anspruch 14, wobei das elektrochemische Anordnungsmodul gemäß Anspruch 9 ist, wobei das Verfahren für ein erste Element, das eine Verbindungsklemme (4a) bildet, das für eine Reihenmontage der elektrochemischen Elementarzellen (1) verwendet wird, den Schritt umfasst, der darin besteht, die Platte mit einer Ablagerung eines isolierenden Materials zu bedecken, um den isolierenden Teil (8a) des ersten Elements, das eine Verbindungsklemme (4a) bildet, vor dem Falten dieses Bands zu bilden.

## Claims

1. Electrochemical assembly module (10) of an energy storage system, comprising an assembly of a plurality of elementary electrochemical cells (1) with gas electrode (E), in particular with a double gas electrode, **characterised in that** it comprises:
- a plurality of lugs (2) associated respectively with the plurality of elementary electrochemical cells (1), the lugs (2) being connected together by a connecting holder (3) and receiving the terminals (B+, B-) of the elementary electrochemical cells (1) so that said terminals (B+, B-) are all electrically connected together by the connecting holder (3),
- a plurality of elements forming connecting clips (4, 4a, 4b) each receiving at least two terminals (B+, B-) of at least two elementary electrochemical cells (1) so that said at least two terminals (B+, B-) are electrically connected to each other by the element forming a connecting clip (4) that is associated therewith.

2. Module according to claim 1, **characterised in that** the elementary electrochemical cells (1) are disposed in a zigzag in the electrochemical assembly module (10).

3. Module according to claim 1 or 2, **characterised in that** said elements forming connecting clips (4, 4a, 4b) are in the form of a double Z clip.

4. Module according to any of the preceding claims, **characterised in that** the elementary electrochemical cells (1) are mounted in parallel in the electrochemical assembly module (10).

5. Module according to claim 4, **characterised in that** the lugs (2) receive the terminals (B+, B-) with the same polarity of the elementary electrochemical cells (1) and **in that** the elements forming the connecting clips (4) each receive at least two terminals (B-, B+) with the same polarity, opposite to the polarity of the terminals (B+, B-) of the elementary electrochemical cells (1) received in the lugs (2).

6. Module according to claim 4 or 5, **characterised in that** said elements forming connecting clips (4) are electrically connected together by means of devices (5) connecting the elements forming connection clips (4).

7. Module according to any of claims 1 to 3, **characterised in that** the elementary electrochemical cells (1) are mounted in series in the electrochemical assembly module (10).

8. Module according to claim 7, **characterised in that** the elements forming connecting clips (4) comprise a first group of first elements forming connecting clips (4a) and a second group of second elements forming connecting clips (4b), said first elements forming connecting clips (4a) electrically connecting the terminals (B+, B-) of two elementary electrochemical cells (1) in order to form pairs of elementary electrochemical cells (1), and the second elements forming connecting clips (4b) electrically connecting the terminals (B+, B-) of two elementary electrochemical cells (1) belonging respectively to two separate pairs of elementary electrochemical cells (1).

9. Module according to claim 7 or 8, **characterised in that** the first elements forming connecting clips (4a) and the second elements forming connecting clips (4b) comprise respectively first (8a) and second (8b) insulating parts so as to allow electrical connection only between the elementary electrochemical cells (1) that they connect together respectively.

10. Module according to one of claims 7 to 9, **characterised in that** the second elements forming connecting clips (4b) are each interposed between a terminal (B+, B-) of an elementary electrochemical cell (1) of a first pair of elementary electrochemical cells (1), paired by a first element forming a connecting clip (4a), and the corresponding lug (2) of the elementary electrochemical cell (1), and between a terminal (B+, B-) of another elementary electrochemical cell (1) of a second pair of elementary electrochemical cells (1), separate from the first pair, paired by a first element forming a connecting clip (4a), and the corresponding lug (2) of the other elementary electrochemical cell (1).

11. Module according to any of claims 1 to 10, **characterised in that** each element forming a connecting clip (4, 4a) comprises several gripping claws (9) for receiving an associated elementary electrochemical cell (1).

12. Module according to any of the preceding claims, **characterised in that** the lugs (2) and/or the elements forming connecting clips (4, 4a, 4b) are in the form of a clip having on each side a complementary shape (21), in particular triangular, to enable an elementary electrochemical cell (1) to be gripped.

13. Module according to any of the preceding claims, **characterised in that** each lug (2) and/or each element forming a connecting clip (4, 4a, 4b) comprises a fold form (22), in particular in the form of a folded tongue, to enable an elementary electrochemical cell (1) to be gripped.

14. Method for producing an electrochemical assembly module (10) according to any preceding claim, **characterised in that** it comprises the step of producing an element forming a connecting clip (4, 4a,) from a sheet cut in a strip, said strip next being folded in order to give its final form to the element forming a connecting clip (4, 4a).

15. Method according to claim 14, the electrochemical assembly module being in accordance with claim 9, the method comprising the step, for a first element forming a connecting clip (4a) used for a mounting of the elementary electrochemical cells (1) in series, consisting of covering the sheet with a deposit of an insulating material in order to form the insulating part (8a) of the first element forming a connecting clip (4a), before the folding of said strip.
